# EUROPEAN PATENT SPECIFICATION

(11) **EP 4 081 413 B1**
(45) Date of publication and mention of the grant of the patent: **11.09.2024**
(21) Application number: 19845663.4
(22) Date of filing: 26.12.2019
(51) Int. Cl.: B60C 19/00, B60C 19/12

(54) **IMPROVED ACOUSTIC FOAM PROFILE FOR PNEUMATIC TIRES**
VERBESSERTES AKUSTISCHES SCHAUMPROFIL FÜR LUFTREIFEN
PROFIL DE MOUSSE ACOUSTIQUE AMÉLIORÉ POUR PNEUMATIQUES

(43) Date of publication of application: 02.11.2022
(73) Proprietor: COMPAGNIE GENERALE DES ETABLISSEMENTS MICHELIN, 63000 Clermont-Ferrand (FR)
(72) Inventor: SARAZIN, Fréderic, Greenville, South Carolina 29605 (US); GAYLO, Ryan Michael, Greenville, South Carolina 29605 (US); LEIFHEIT, Neal, Greenville, South Carolina 29605 (US)
(74) Representative: Casalonga
(86) International application number: PCT/US2019/068537
(87) International publication number: WO 2021/133392

(56) References cited:
- DE-A1- 102009 024 454
- DE-A1- 102011 053 686
- DE-A1- 102014 206 009
- DE-A1- 102015 212 874
- JP-A- 2005 262 920

## Description

### FIELD OF THE INVENTION

The subject matter of the present invention relates to tires, and more specifically to tires having on their radially inner surface a layer of a sealant intended to seal a puncture in the crown of the tire and a strip of foam intended to damp the cavity noise. In particular, the present invention relates to a tire according to the preamble of claim 1, such as it is e.g. known from DE 10 2014 206 009 A1.

### BACKGROUND OF THE INVENTION

The development of motor vehicle technology has lead to a demand for the reduction of noise perceived by the occupants of the vehicle. In particular, electrical propulsion has reduced compartment noise levels such that the noise of the tires, and in particular the noise associated with the internal cavity of the tire while rolling, has become noticeable. Attaching foam strips to the internal surface of the pneumatic tire have proved to be a successful method to dampen the audible tire cavity, for example, US Pat. No. 7,975,740.

The pneumatic tire still is subject to punctures and air loss as a result of those punctures. To mitigate or eliminate the air loss due to puncture, tire manufactures may apply a self-sealing product upon the radially inner surface of the inner-liner of the tire. When a nail, or other object, penetrates the tire crown, the sealant, because of the product's softness and ability to creep readily, penetrates the puncture and prevents the pneumatic tire from losing air. Such a tire with a layer able to creep and seal the puncture is said to be a "self-sealing tire." The grooves of the tire being the thinnest portion of the tire's tread are particularly susceptible to penetration damage.

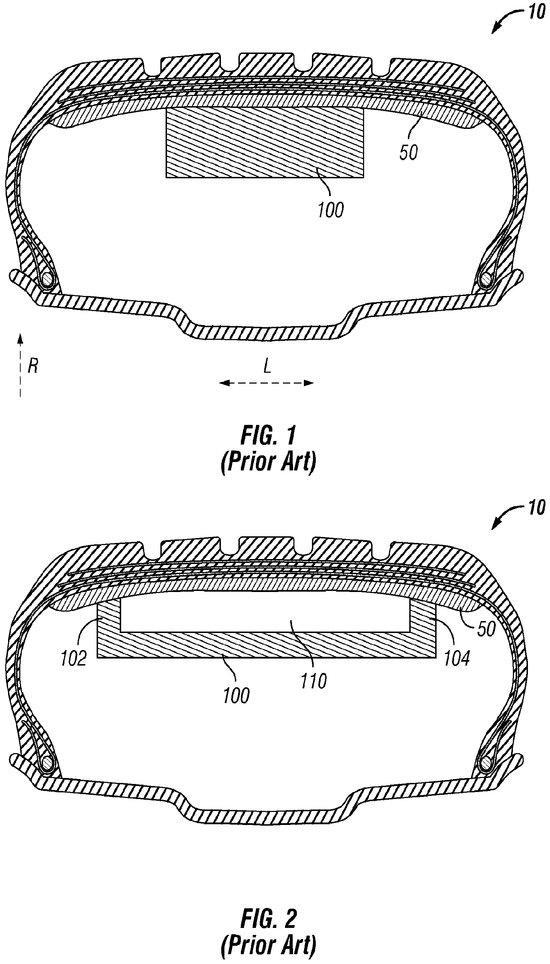

With the advent of electric vehicles, it has become desirous to combine these technologies, such as shown in U.S. Pat. App. Pub. No. US 2016/0347127. Combining the technologies, however, have been met with certain difficulties. In particular, the acoustic foam 100, when applied on the self-sealing layer 50, such as the cross section of the tire 10 shown in FIG. 1, reduces the effectiveness of the self-sealing abilities of the tire 10, resulting in a need for additional self-sealing product and/or acceptance of a reduction of the self-sealing performance. The additional self-sealing product needed for improved effectiveness is both expensive and adds unnecessary additional weight to the tire.

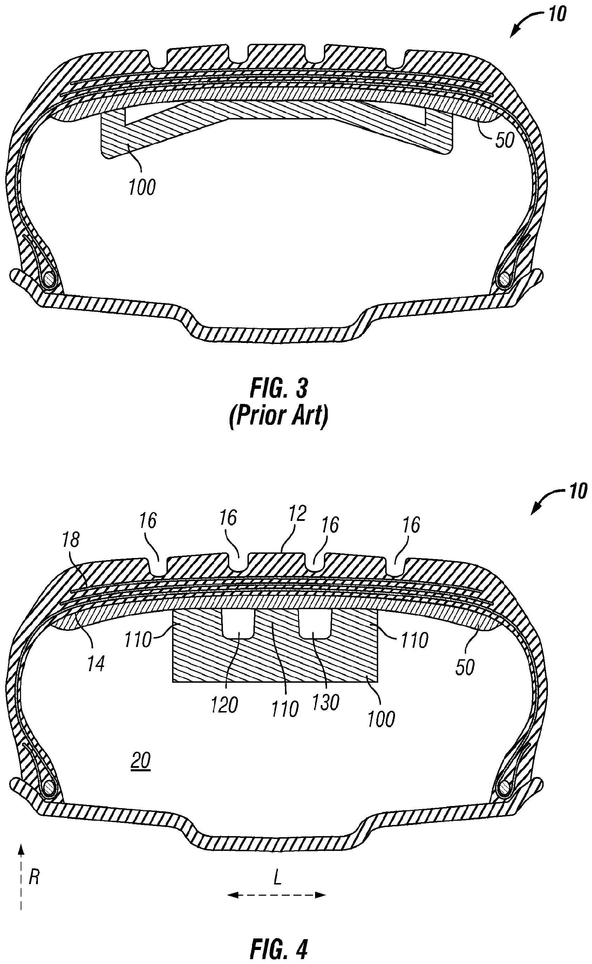

Attempts to increase the effectiveness of the self-sealing layer have been made. One such attempt, as shown in FIG. 2, is where the radially outer surface of acoustic foam 100 is cut to form a U-shape profile. When installed, the acoustic foam 100 touches and secures itself to the self-sealing layer 50 at the lateral ends 102, 104 of the acoustic foam 100, leaving the middle portion radially inward from the self-sealing layer. In practice, however, it is difficult to achieve such careful positioning, and even when achieved, inadvertent compression of the acoustic foam 100 results, as shown in FIG. 3, in the middle portion adhering to the self-sealing layer, resulting in decreased self-sealing performance and tire imbalance.

An acoustic foam profile which does not appreciably interfere with the effectiveness of the self-sealing layer is desirous. In particular a foam profile which does not interfere with the effectiveness of the self-sealing layer and prevents the acoustic foam structure from collapsing into the self-sealing layer would be particularly advantageous.

### SUMMARY OF THE INVENTION

This problem is solved by a tire according to claim 1. The dependent claims relate to advantageous embodiments.

Aspects and advantages of the invention will be set forth in part in the following description.

In one embodiment, a polyalphaolefin adhesive sealant is applied to the radial interior of the tire in the region of the belt reinforcements of the crown. A noise-dampening foam ring having circumferential grooves in the radial outside surface of the foam is applied to the adhesive sealant. The grooves of the foam are laterally aligned with the circumferential grooves of the tire such that the foam touches the sealant on areas that are not laterally aligned with the longitudinal grooves of the tire. This prevents the foam from hindering the flow of sealant in the area immediately below the tread grooves improving the self-sealing performance of the tire.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a cross-section view of a prior art tire having acoustic foam and a self-sealing product layer applied to the interior taken through the axis of rotation of the tire.
FIG. 2 provides a cross-section view of a prior art tire having U-shaped acoustic foam and a sealant layer applied to the interior.
FIG. 3 provides a cross-section view of a prior art tire having U-shaped acoustic foam and a sealant layer applied to the interior with the U-shaped acoustic foam collapsed into the sealant layer.
FIG. 4 provides a cross-section view of an embodiment of the invention, having acoustic foam and a sealant layer applied to the interior of a pneumatic tire.

The use of identical or similar reference numerals in different figures denotes identical or similar features.

### DETAILED DESCRIPTION OF THE INVENTION

The present invention provides a pneumatic tire having a layer of self-sealing product applied to the interior of the pneumatic tire in the crown region with a layer of acoustic foam applied to the surface of the self-sealing product. For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope of the invention defined in the appended claims. For instance, features or steps illustrated or described as part of one embodiment, can be used with another embodiment or steps to yield a still further embodiments or methods. Thus, it is intended that the present invention covers such modifications and variations as come within the scope of the appended claims.

The following terms are defined as follows for this disclosure:

"Axial direction" or the letter "A" in the figures refers to a direction parallel to the axis of rotation of for example, the tire, and/or wheel as it travels along a road surface.

"Radial direction" or the letter "R" in the figures refers to a direction that is orthogonal to the axial direction and extends in the same direction as any radius that extends orthogonally from the axial direction.

"Equatorial plane" means a plane that passes perpendicular to the axis of rotation and bisects the outer tread band and/or wheel structure.

"Circumferential direction" or the letter "C" in the figures refers to a direction is orthogonal to the axial direction and orthogonal to a radial direction.

"Radial plane" means a plane that passes perpendicular to the equatorial plane and through the axis of rotation of the wheel.

"Lateral direction" or the letter "L" means a direction that is orthogonal to an equatorial plane.

FIG. 4 provides an exemplary embodiment of a tire 10 having a tread surface 12 having a plurality of circumferential tread grooves 16 on the tread surface 12. The inner surface 14 of the tire 10 faces an internal cavity 20 which is made when the tire is mounted upon a rim 40. A self-sealing adhesive layer 50 is positioned on the inner surface 14 of the tire. The adhesive layer 50 is positioned circumferentially around the interior surface 14 of the tire 10 and is laterally aligned with the belt reinforcement layers 18 of the tire. The self-sealing adhesive layer 50 in this embodiment is a gel of polyurethane. Other materials may be used, including a sealant of polyalphaolefin

A strip of noise dampening foam 100 is attached on the radially inner surface of the self-sealing adhesive layer 50. The noise dampening foam 100 has a plurality of circumferential grooves 120, 130. Each of the circumferential grooves 120, 130 face the interior surface 14 of the tire 10. In this embodiment, support walls 110 forming the lateral sides of the circumferential grooves 120, 130 of the noise dampening foam 100 contact the self-sealing adhesive layer 50 securing the noise dampening foam 100 to the interior of the tire 10. The support walls 110 help keep the bottom surfaces of the circumferential grooves 120, 130 from making contact with the adhesive layer during installation and during the tire's operation. The support walls 110 make contact with the self-sealing adhesive 50 in the region laterally between the circumferential tread grooves 16 of the tire 10.

Each of the circumferential grooves 120, 130 of the noise dampening foam are positioned in lateral alignment with one of the plurality of circumferential tread grooves 16. In other words, in the present embodiments, each circumferential tread groove 16 does not have foam contacting the self-sealing adhesive layer that lies below it. If the tire is pierced by a foreign object within the tread groove 16, the self-sealing adhesive material 50 is able to flow unrestricted by the foam 100 to fill the puncture caused by the foreign object.

In this embodiment, only two circumferential grooves 120, 130 in the foam are shown. Other embodiments may have three grooves, four grooves, five grooves or more depending upon how many longitudinal tread grooves 16 that the noise dampening foam 100 laterally spans. In this embodiment, the noise dampening foam laterally spans only two grooves 16 thus it only contains two grooves 120, 130 in the foam 100.

The noise dampening foam may be in the form of a strip having two ends. The two ends may be bonded together. The two ends of the noise dampening foam may be butted against one another or alternatively may be separated by a gap. The noise dampening foam strip may be in the form of a continuous ring.

The lateral width of each of the grooves 120, 130 of the noise dampening foam 100 are wider than the width of the tire tread groove 16 of which it is laterally aligned with. In the embodiment shown, the grooves of the noise dampening ring are 15.5 mm wide in the lateral direction and 10 mm deep in the radial direction while the tread grooves are 5 mm wide as measured at the bottom of the tread groove 16 and approximately 10 mm wide at the radial outer surface of the tread 12.

It should be noted that each of the exemplary embodiments presented and discussed herein should not insinuate limitations of the present subject matter.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm"). When the term "approximately" is used, it should be understood to include dimensions that are 25% larger or 25% smaller than the value stated.

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

## Claims

1. A tire (10) comprising
a tread surface (12),
a plurality of circumferential tread grooves (16) on the tread surface (12), an internal cavity (20) and an inner surface (14) facing the internal cavity,
a self-sealing adhesive layer (50) positioned on the inner surface (14) of the tire (10); and
a strip of noise dampening foam (100) attached to the self-sealing adhesive layer (50), **characterised in that**
the strip of noise dampening foam (100) has a plurality of circumferential grooves (120, 130), each of the circumferential grooves (120, 130) of the foam (100) facing the self-sealing adhesive layer (50), each of the circumferential grooves (120, 130) of the foam (100) is positioned in lateral alignment with one of the plurality of circumferential tread grooves (16) to which it corresponds, such that each circumferential tread groove (16) does not have foam contacting the self-sealing adhesive layer (50) that lies below it.

2. The tire (10) of claim 1 wherein foam (100) touches the self-sealing adhesive layer (50) at a lateral location between each of the plurality of circumferential tread grooves (16) that the noise dampening foam (100) laterally spans.

3. The tire (10) of any of the above claims wherein the noise dampening foam (100) strip is a continuous ring.

4. The tire (10) of any of the above claims wherein each of the plurality of circumferential grooves (120, 130) of the noise dampening foam (100) strip has a radial depth of approximately 1 cm.

5. The tire (10) of any of the above claims wherein each of the plurality of circumferential tread grooves (16) has a lateral width and wherein each of the plurality of circumferential grooves (120, 130) of the noise dampening foam (100) strip has a lateral width, the lateral width of each of the plurality of circumferential grooves (120, 130) of the noise dampening foam (100) strip being greater than the lateral width of the corresponding circumferential tread grooves (16) of the plurality of circumferential grooves (120, 130).

6. The tire (10) of any of the above claims wherein the self-sealing adhesive layer (50) is a polyurethane.

7. The tire (10) of any of the claims 1-5, wherein the self-sealing adhesive layer (50) is a polyalphaolefin.

8. The tire (10) of any of the above claims wherein noise dampening foam (100) strip is an open cell foam (100).

## Patentansprüche

1. Reifen (10), umfassend
eine Lauffläche (12),
eine Vielzahl von umlaufenden Profilrillen (16) auf der Laufflächenoberfläche (12),
einen inneren Hohlraum (20) und eine innere Oberfläche (14), die dem inneren Hohlraum zugewandt ist,
eine selbstdichtende Klebeschicht (50), die auf der Innenfläche (14) des Reifens (10) angeordnet ist; und einen Streifen aus geräuschdämpfendem Schaumstoff (100), der an der selbstdichtenden Klebeschicht (50) befestigt ist,
**dadurch gekennzeichnet, dass**
der Streifen aus geräuschdämpfendem Schaumstoff (100) eine Vielzahl von Umfangsrillen (120, 130) aufweist, wobei jede der Umfangsrillen (120, 130) des Schaumstoffs (100) der selbstabdichtenden Klebeschicht (50) zugewandt ist, jede der Umfangsrillen (120, 130) des Schaums (100) in seitlicher Ausrichtung mit einer der mehreren Umfangslaufflächenrillen (16) positioniert ist, der sie entspricht, sodass jede umlaufende Profilrille (16) keinen Schaum aufweist, der die darunter liegende selbstdichtende Klebstoffschicht (50) berührt.

2. Reifen (10) nach Anspruch 1, bei dem der Schaumstoff (100) die selbstdichtende Klebeschicht (50) an einer seitlichen Stelle zwischen jeder der Vielzahl von umlaufenden Laufflächenrillen (16) berührt, die der geräuschdämpfende Schaumstoff (100) seitlich überspannt.

3. Reifen (10) nach einem der obigen Ansprüche, wobei der geräuschdämpfende Schaumstoffstreifen (100) ein durchgehender Ring ist.

4. Reifen (10) nach einem der obigen Ansprüche, wobei jede der Vielzahl von Umfangsrillen (120, 130) des geräuschdämpfenden Schaumstoffstreifens (100) eine radiale Tiefe von etwa 1 cm aufweist.

5. Reifen (10) nach einem der obigen Ansprüche, wobei jede der Vielzahl von Umfangslaufflächenrillen (16) eine seitliche Breite hat und wobei jede der Vielzahl von Umfangsrillen (120, 130) des geräuschdämpfenden Schaumstoffstreifens (100) eine seitliche Breite hat, wobei die seitliche Breite jeder der Vielzahl von Umfangsrillen (120, 130) des Geräuschdämpfungs-Schaumstoffstreifens (100) größer ist als die seitliche Breite der entsprechenden Umfangslaufflächenrillen (16) der Vielzahl von Umfangsrillen (120, 130).

6. Reifen (10) nach einem der obigen Ansprüche, wobei die selbstdichtende Haftschicht (50) ein Polyurethan ist.

7. Reifen (10) nach einem der Ansprüche 1-5, wobei die selbstdichtende Klebstoffschicht (50) ein Polyalphaolefin ist.

8. Reifen (10) nach einem der obigen Ansprüche, wobei Streifen aus geräuschdämpfendem Schaum (100) ein offenzelliger Schaum (100) ist.

## Revendications

1. Pneu (10) comprenant
une surface de roulement (12),
une pluralité de gorges de roulement circonférentielles (16) sur la surface de roulement (12),
une cavité interne (20) et une surface intérieure (14) tournée vers la cavité interne,
une couche adhésive auto-étanche (50) positionnée sur la surface intérieure (14) du pneu (10) ; et
une bande de mousse isolante acoustiquement (100) fixée à la couche adhésive auto-étanche (50),
**caractérisé en ce que**
la bande de mousse isolante acoustiquement (100) comporte une pluralité de gorges circonférentielles (120, 130), chacune des gorges circonférentielles (120, 130) de la mousse (100) étant tournée vers la couche adhésive auto-étanche (50), chacune des gorges circonférentielles (120, 130) de la mousse (100) étant positionnée en alignement latéral avec l'une de la pluralité de gorges de roulement circonférentielles (16) à laquelle elle correspond, de sorte que chaque gorge de roulement circonférentielle (16) n'a pas de mousse en contact avec la couche adhésive auto-étanche (50) qui repose en dessous.

2. Pneu (10) selon la revendication 1, dans lequel de la mousse (100) touche la couche adhésive auto-étanche (50) à un emplacement latéral entre chacune de la pluralité de gorges circonférentielles (16) que la mousse isolante acoustiquement (100) sous-tend latéralement.

3. Pneu (10) selon l'une quelconque des revendications précédentes, dans lequel la bande de mousse isolante acoustiquement (100) est un anneau continu.

4. Pneu (10) selon l'une quelconque des revendications précédentes, dans lequel chacune de la pluralité de gorges de roulement circonférentielles (120, 130) de la bande de mousse isolante acoustiquement (100) a une profondeur radiale d'approximativement 1 cm.

5. Pneu (10) selon l'une quelconque des revendications précédentes, dans lequel chacune de la pluralité de gorges de roulement circonférentielles (16) a une largeur latérale et chacune de la pluralité de gorges circonférentielles (120, 130) de la bande de mousse isolante acoustiquement (100) a une largeur latérale, la largeur latérale de chacune de la pluralité de gorges de roulement circonférentielles (120, 130) de la bande de mousse isolante acoustiquement (100) étant supérieure à la largeur latérale des gorges de roulement circonférentielles correspondantes (16) de la pluralité de gorges de roulement circonférentielles (120, 130).

6. Pneu (10) selon l'une quelconque des revendications précédentes, dans lequel la couche adhésive auto-étanche (50) est en polyuréthane.

7. Pneu (10) selon l'une quelconque des revendications 1 à 5, dans lequel la couche adhésive auto-étanche (50) est en polyalphaoléfine.

8. Pneu (10) selon l'une quelconque des revendications précédentes, dans lequel la bande de mousse isolante acoustiquement (100) est une mousse à cellules ouvertes (100) .
